Europäisches Patentamt

European Patent Office

Office européen des brevets

(11) Veröffentlichungsnummer: **0 383 007**
**A2**

(12) **EUROPÄISCHE PATENTANMELDUNG**

(21) Anmeldenummer: **90100201.4**

(51) Int. Cl.5: **G11B 23/023**

(22) Anmeldetag: **05.01.90**

(30) Priorität: **17.02.89 DE 3904787**

(43) Veröffentlichungstag der Anmeldung:
**22.08.90 Patentblatt 90/34**

(84) Benannte Vertragsstaaten:
**AT BE CH DE DK ES FR GB IT LI NL SE**

(71) Anmelder: **fischerwerke Artur Fischer GmbH
& Co. KG**
**Weinhalde 14 - 18**
**D-7244 Waldachtal 3/Tumlingen(DE)**

(72) Erfinder: **Axt, Dieter**
**Willi-König-Strasse 37**
**D-7244 Waldachtal 1(DE)**
Erfinder: **Claussen, Friedrich**
**Schellenbergstrasse 13**
**D-7244 Waldachtal 3(DE)**
Erfinder: **Hera-Barz, Waltraud, Dipl.-Kfm.**
**Buchenweg 18**
**D-7230 Schramberg(DE)**
Erfinder: **Körner, Edmund, Dipl.-Ing.**
**Im Martinskirchle 20**
**D-7244 Waldachtal 3(DE)**

Erfinder: **Lamparth, Waldemar**
**In der Misse 7**
**D 7273 Ebhausen(DE)**
Erfinder: **Nehl, Wolfgang**
**Im Martinskirchle 22**
**D-7244 Waldachtal 3(DE)**
Erfinder: **Richter, Hermann**
**Sonnenhang 10**
**D-7244 Waldachtal 3(DE)**
Erfinder: **Stromiedel, Konrad, Dipl.-Ing.**
**Friedrich-Schneck-Strasse 9**
**D-7244 Waldachtal 3(DE)**
Erfinder: **Weber, Wilfried, Dipl.-Ing.**
**Am Stücklesberg 10**
**D-7294 Schopfloch-Unteriflingen(DE)**
Erfinder: **Wein, Reiner**
**Riedsteige 38**
**D-7295 Dornstetten(DE)**

(74) Vertreter: **Ott, Elmar, Dipl.-Ing.**
**fischerwerke Artur Fischer GmbH & Co KG**
**Weinhalde 14-18**
**D-7244 Waldachtal 3/Tumlingen(DE)**

(54) Behälter mit Mangnetbandkassette.

(57)  2.1 Es sind Behälter bekannt, die zur Aufnahme von Magnetbandkassetten verwendet werden. Damit die Bandspulen nicht durch Erschütterungen sich unbeabsichtigt verdrehen, sind Bandarretierungen vorgesehen, die in die Spulennaben eingreifen.

2.2 Um ein bequemes Einschieben und Herausnehmen der Tonbandkassetten zu erreichen, werden besonders elastische Arretiereinrichtungen vorgesehen, die mittels separater Federelemente in die Arretierposition gedrückt werden.

Fig.1

## Behälter mit Magnetbandkassette

Die Erfindung betrifft einen Behälter mit Magnetbandkassette gemäß der Gattung des Hauptanspruchs.

Es sind Aufbewahrungsbehälter für Magnetbandkassetten bekannt, bei denen die Magnetbandkassetten flach auf einen Schieber gelegt werden und gegen eine Federkraft in das Behältergehäuse einschiebbar sind. Die DE-PS 22 48 408 zeigt einen derartigen Behälter.

Am Schieber, der die Magnetbandkassetten aufnimmt, können Arretiernocken im Abstand nebeneinander oder hintereinander ausgebildet sein, die in die Naben der Tonbandspulen der Magnetbandkassette eingreifen und diese gegen Verdrehen sichern. Die Arretiernocken sind starr ausgebildet, weshalb der Schieber entsprechend weit aus dem Gehäuse herausstehen muß, damit die Magnetbandkassette von oben auf den Schieber aufsetzbar ist.

Aus der DE-PS 28 37 609 ist ein Behälter für eine Magnetbandkassette bekannt, bei dem elastische Arretiereinrichtungen in Form von elastischen Laschen am Gehäuseboden angeordnet sind. Die Funktionsweise der Laschen ist jedoch davon abhängig, daß die Laschen auch bei häufigem Einschieben und Entnehmen von Magnetbandkassetten ihre Elastizität unverändert beibehalten. Dies ist bei derart einfach ausgebildeten Laschen nicht in gewünschtem Maße möglich.

Der Erfindung liegt die Aufgabe zugrunde, einen Behälter der eingangs genannten Gattung zu schaffen, bei dem die Arretiereinrichtungen, welche an den Spulennaben angreifen, am Behälterboden ausgebildet sind und sich gegen die Kraft eines Federelements bewegen lassen.

Die Lösung dieser Aufgabe erhält man durch die im Hauptanspruch angegebenen Merkmale. Die Arretiereinrichtungen sind mit einem federelastischen Element verbunden, welches diese in die Arretierposition drückt. Besonders vorteilhaft ist es, die federelastischen Elemente im Gehäuseboden als Stege oder waagerechte Laschen auszubilden, auf denen die Arretiereinrichtungen nach oben in das Gehäuseinnere abstehen. Die Stege oder Laschen können durch entsprechende Aussparungen im Gehäuseboden ausgebildet sein, so daß der Gehäuseboden selbst die Funktion der federelastischen Elemente übernimmt. Die Arretiereinrichtungen selbst können aus elastischem Kunststoff bestehen, damit diese beim Einschieben und Herausnehmen einer Tonbandkassette elastisch umbiegbar sind. Die Kombination der elastischen Arretiereinrichtungen, die als Kunststoffzungen ausgebildet sein können, mit den federnden Stegen oder Laschen ergibt eine optimale Elastizität für die gesamte Spulenarretierung.

Die Arretiereinrichtungen können auch in einem Schwenklager gelagert sein und mittels eines Federdrahts schwenkbar in der Arretierposition gehalten werden. Beim Einschieben oder Herausnehmen der Tonbandkassette lassen sich diese Arretiereinrichtungen in eine Aussparung am Gehäuseboden verschwenken.

Es besteht auch die Möglichkeit, die Arretiereinrichtungen so anzuordnen, daß diese teleskopartig in eine Aussparung am Gehäuseboden gegen eine Druckfeder absenkbar sind.

Die Erfindung wird nachfolgend anhand der Zeichnung näher erläutert.

Es zeigen:

Figur 1 einen Gehäuseeinsatz mit vier Behältern zur Aufnahme einer Magnetbandkassette,

Figur 2 einen Behälter mit einer Magnetbandkassette im Bereich einer Arretiereinrichtung in der Arretierposition,

Figur 3 den Behälter gemäß Figur 2, wobei jedoch die Arretiereinrichtungen aus der Arretierposition ausgelenkt sind,

Figur 4 ein Ausführungsbeispiel mit einem schwenkbar gelagerten Arretierelement und

Figur 5 ein teleskopartiges absenkbares Arretierelement.

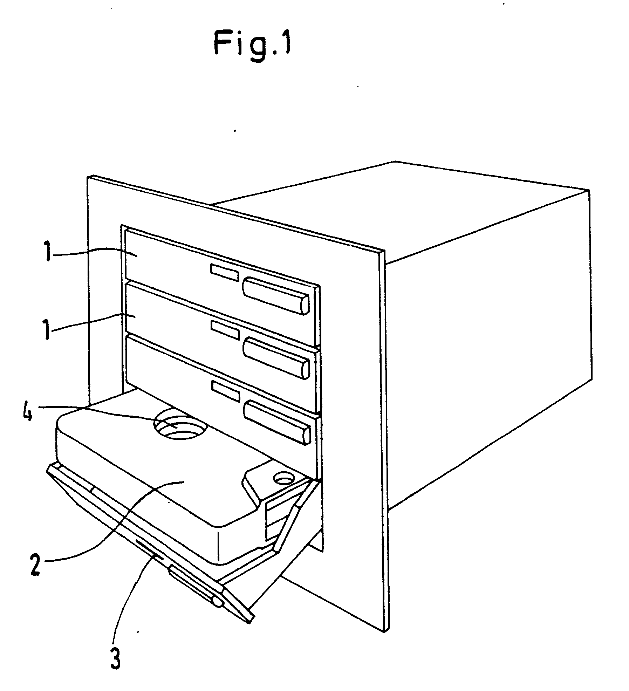

Der in Figur 1 dargestellte Gehäuseeinsatz besitzt insgesamt vier Behälter 1, die jeweils eine Tonbandkassette 2 aufnehmen können. Der unterste Behälter 1 ist geöffnet, so daß die Tonbandkassette 2 über der nach unten verschwenkten Frontblende 3 aus dem Gehäuse herausgezogen werden kann. Die Tonbandkassette 2 besitzt Spulennaben 4, von denen nur eine sichtbar ist.

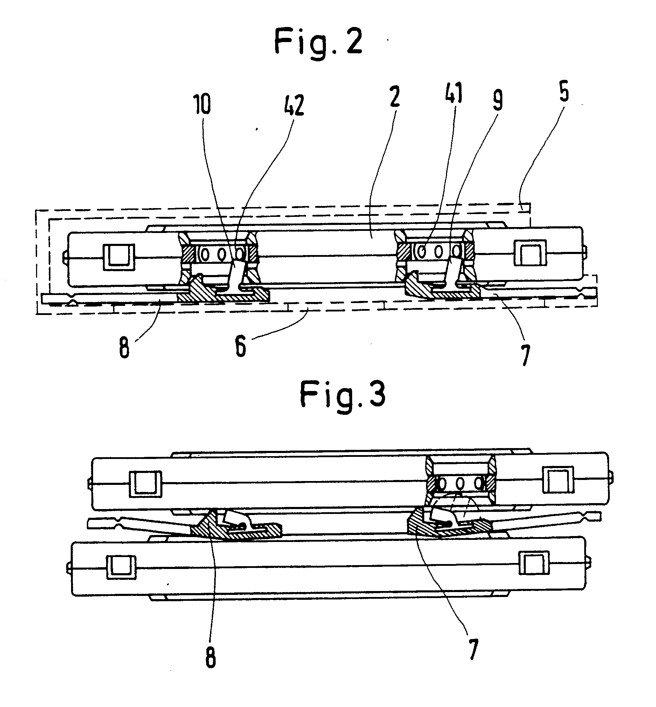

In Figur 2 ist ein Ausführungsbeispiel teilweise dargestellt. Die Tonbandkassette 2 befindet sich hier im Gehäuse 5 des Kassettenbehälters. Vom Gehäuse 5 ist insbesondere der Teil des Gehäusebodens 6 dargestellt, an dem federelastische Elemente in Form von waagerechten Stegen 7, 8 ausgebildet sind. Auf den Stegen 7, 8 sind biegsame Zungen 9, 10 befestigt, die die eigentliche Arretiereinrichtung bilden. Die Zungen 9, 10 greifen in die Spulennaben 41, 42 ein und verhindern, daß sich die Spulen durch Vibrationen, Erschütterungen oder dergleichen selbsttätig verdrehen.

In Figur 3 ist die Magnetbandkassette 2 noch nicht vollständig in die Arretierposition eingeschoben, weshalb hier die Zungen 9, 10 elastisch umgebogen sind und die Stege 7, 8 nach unten ausgelenkt sind.

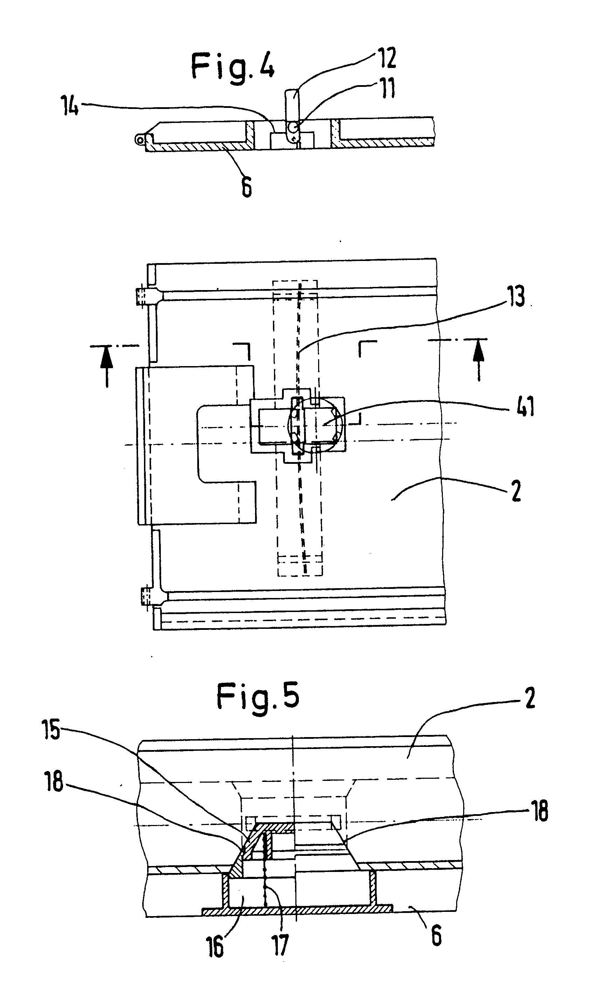

In Figur 4 ist ein weiteres Ausführungsbeispiel dargestellt, bei dem um eine Achse 11 schwenkbar gelagerte Arretierelemente verwendet werden. In der Zeichnung ist nur eines der beiden Arretierelemente 12 dargestellt. Unten am Arretierelement 12 greift ein Federdraht 13 an, der das Arretierelement 12 in die Arretierposition, wie in Figur 4 dargestellt, drückt.

Das Arretierelement 12 ist in einer Aussparung 14 des Gehäusebodens 6 schwenkbar gelagert. Wird die Magnetbandkassette 2 über die Aussparung 14 hinweggeschoben, so wird dadurch das Arretierelement 12 in die Aussparung 14 hineingeschwenkt, bis sich die Spulennabe 41 in der Position des Arretierelements 12 befindet. In dieser Position drückt der Federdraht 13 das Arretierelement in die dargestellte Arretierposition, so daß dieses in die Spulennabe 41 eingreift.

Beim Herausziehen der Magnetbandkassette 2 wird das Arretierelement 12 ebenfalls um 90° in die Aussparung 14 verschwenkt.

In Figur 5 ist eine weitere Ausführungsform dargestellt, bei der das Arretierelement 15 teleskopartig in eine Aussparung 16 gegen eine Druckfeder 17 absenkbar ist. Das Arretierelement 15 besitzt Abschrägungen 18, an denen die Magnetbandkassette 2 beim Einschieben und Herausnehmen zur Anlage kommt und dadurch das Arretierelement 15 gegen die Federkraft der Feder 17 niederdrückt.

## Ansprüche

1. Behälter mit einer durch eine Behälteröffnung eingeschobenen Magnetbandkassette, an deren Spulennaben elastisch nachgiebige Arretiereinrichtungen angreifen, die am Behältergehäuse nach innen abstehen, **dadurch gekennzeichnet,** daß an den Arretiereinrichtungen (9, 10) ein federelastisches Element (7, 8) angreift, das die Arretiereinrichtungen (9, 10) in die Arretierposition drückt.

2. Behälter nach Anspruch 1, **dadurch gekennzeichnet,** daß die federelastischen Elemente im Gehäuseboden (6) ausgebildete waagerechte Stege (7, 8) oder Laschen sind, auf denen als Arretiereinrichtungen schwenkbare Zungen (9, 10) angeordnet sind.

3. Behälter nach Anspruch 2, **dadurch gekennzeichnet,** daß die Zungen (9, 10) aus elastischem Kunststoffmaterial bestehen.

4. Behälter nach Anspruch 1, **dadurch gekennzeichnet,** daß die Arretiereinrichtungen (12) in einem Schwenklager (11) gelagert und gegen die Federkraft einer Feder (13) in eine Aussparung (14) am Gehäuseboden (6) verschwenkbar sind.

5. Behälter nach Anspruch 1, **dadurch gekennzeichnet,** daß die Arretiereinrichtungen (15) teleskopartig in eine am Gehäuseboden (6) ausgebildete Aussparung (16) gegen eine Druckfeder (17) absenkbar sind.

# Fig.1

## Fig. 2

## Fig. 3

Fig.4

Fig.5